# EUROPÄISCHE PATENTSCHRIFT

(11) **EP 3 551 392 B1**
(45) Veröffentlichungstag und Bekanntmachung des Hinweises auf die Patenterteilung: **27.03.2024**
(21) Anmeldenummer: 16822116.6
(22) Anmeldetag: 06.12.2016
(51) Int. Cl.: B25J 9/04, B25J 9/10, B25J 11/00

(54) **MANIPULATOR ZUM VERSCHWENKEN EINES MANIPULATIONSGEGENSTANDS**
MANIPULATOR FOR PIVOTING A MANIPULATION OBJECT
MANIPULATEUR DE PIVOTEMENT D'UN OBJET DE MANIPULATION

(43) Veröffentlichungstag der Anmeldung: 16.10.2019
(73) Patentinhaber: Tmt - Tapping Measuring Technology Sàrl, 1122 Luxembourg (LU)
(72) Erfinder: MALIVOIR, Philippe, F-54680 Errouville (FR)
(74) Vertreter: advotec.
(86) Internationale Anmeldenummer: PCT/EP2016/079818
(87) Internationale Veröffentlichungsnummer: WO 2018/103821

(56) Entgegenhaltungen:
- WO-A2-2006/057821
- CA-A1- 2 375 872
- US-A- 2 811 267

## Beschreibung

Die vorliegende Erfindung betrifft einen Manipulator zum Verschwenken eines Manipulationsgegenstands nach dem Oberbegriff des Anspruchs 1.

Manipulatoren der eingangs genannten Art werden insbesondere zur Handhabung von Abstichkanaldeckeln in der unmittelbaren Peripherie eines Hochofens oder auch zur Handhabung von Bohrlafetten von Stichlochbohrvorrichtungen eingesetzt. Dabei ergeben sich aufgrund der Anordnung weiterer zum Betrieb des Hochofens benötigter Vorrichtungen, die sich ebenfalls in der unmittelbaren Peripherie des Hochofens befinden und zu beiden Seiten des Abstichkanals angeordnet sind, wie etwa eine Stichlochstopfvorrichtung, besonders beengte Verhältnisse bei der Handhabung. Beispielsweise muss ein Abstichkanaldeckel nachdem er vom Abstichkanal abgehoben wurde in eine seitlich des Abstichkanals angeordnete Rastposition überführt werden, wobei während des Verschwenkens der Schwenkbasis des Manipulators eine der Basisschwenkbewegung überlagerte Schwenkbewegung ausführt werden muss, um etwa eine Kollision mit der Stichlochbohrvorrichtung oder der Stichlochstopfvorrichtung zu vermeiden.

Bei bislang zur Handhabung eingesetzten Manipulatoren ist daher zusätzlich zu einem Schwenkantrieb der Schwenkbasis des Manipulators, die ein Verschwenken eines an der Schwenkbasis angeordneten Auslegers gegenüber einem Gestell des Manipulators ermöglicht, der am freien Ende des Auslegers angeordnete und zur Verbindung mit dem Manipulationsgegenstand vorgesehene Lastträger mit einem weiteren Schwenkantrieb zu versehen. Abgesehen davon, dass die Anordnung des weiteren Schwenkantriebs am Lastträger zu einer Erhöhung der auf den Ausleger wirkenden Gewichtslast führt, ist insbesondere im Fall der Handhabung von Abstichkanaldeckeln der am Lastträger angeordnete Schwenkantrieb auch besonderen thermischen Belastungen ausgesetzt, da die Abstichkanaldeckel aufgrund der Wärmeabstrahlung des glühend aus dem Abstichloch des Hochofens abgeführten Stahls eine hohe Temperatur aufweisen, die wiederrum vom Abstichkanaldeckel durch Wärmeleitung und Wärmestrahlung auf den Schwenkantrieb wirkt. Aus dieser hohen thermischen Beanspruchung resultiert ein entsprechend hoher Wartungs- und bei Eintreten von Schäden entsprechender Reparaturaufwand, der den reibungsfreien Betrieb des Hochofens beeinträchtigt.

Aus der US 2 811 267 A ist ein Manipulator zum Verschwenken eines Manipulationsgegenstands bekannt, der am freien Ende eines mit einer Schwenkbasis verbundenen Auslegers einen Lastträger aufweist, welcher mittels eines Steuergetriebes eine der Schwenkbewegung des Auslegers überlagerte Lastträgerschwenkbewegung ermöglicht. Hierzu ist das Steuergetriebe zwischen einer auf den Lastträger wirkenden Zahnstange und einem Antriebsmotor angeordnet.

Ein Manipulator zum Verschwenken eines Manipulationsgegenstands mit den Merkmalen des Oberbegriffs des Anspruchs 1 ist aus der CA 2 375 872 A1 bekannt.

Der vorliegenden Erfindung liegt die Aufgabe zugrunde, einen Manipulator der eingangs genannten Art vorzuschlagen, der einen geringeren Wartungsaufwand erfordert.

Zur Lösung dieser Aufgabe weist der erfindungsgemäße Manipulator die Merkmale des Anspruchs 1 auf.

Erfindungsgemäß ist zur Ausbildung eines in der Horizontalebene ausgebildeten Schwenk-Gelenkvierecks eine sich vom Gestell zur Schwenkeinrichtung erstreckende Steuerstange vorgesehen, die mit einem Ende gelenkig an der Schwenkeinrichtung des Lastträgers und mit dem anderen Ende über ein Steuergetriebe gelenkig mit dem Gestell verbunden ist, derart, dass bei einer Basisschwenkbewegung der Schwenkbasis über das Steuergetriebe und die Steuerstange eine der Basisschwenkbewegung überlagerte Lastträgerschwenkbewegung erfolgt.

Der erfindungsgemäß ausgestaltete Manipulator ermöglicht über das Getriebe eine an die Schwenkbewegung der Schwenkbasis gegenüber dem Gestell gekoppelte Schwenkbewegung des Lastträgers, sodass die für das Verschwenken der Schwenkbasis vorgesehene Antriebseinrichtung gleichzeitig auch zum Verschwenken des Lastträgers verwendet werden kann, wobei das Steuergetriebe dafür sorgt, dass die Schwenkbewegung des Lastträgers voreilend oder nacheilend oder entgegengesetzt der Schwenkbewegung des Schwenkantriebs erfolgen kann und somit der Lastträger und der mit dem Lastträger verbundene Manipulationsgegenstand von der Schwenkbasis abweichende Schwenkpositionen einnehmen kann. Das Steuergetriebe ermöglicht dabei eine Steuerung der Schwenkpositionen des mit dem Lastträger verbundenen Manipulationsgegenstands, die beispielsweise Kollisionen des Manipulationsgegenstands mit einem im Bereich des Schwenkweges angeordneten Gegenstand, also beispielsweise einer Stichlochstopfvorrichtung oder eine Stichlochbohrvorrichtung, dadurch verhindern kann, dass eine Ecke des sich im Wesentlichen flächig in der Horizontalebene erstreckenden Manipulationsgegenstands im Kollisionsbereich entgegen der Schwenkbewegung der Schwenkbasis verschwenkt wird oder mit größerer Drehgeschwindigkeit verschwenkt wird, um kollisionsfrei an dem Gegenstand vorbei bewegt werden zu können.

Mit dem Steuergetriebe kann demnach nicht nur die Schwenkrichtung, sondern darüber hinaus auch die Drehgeschwindigkeit des Lastträgers und des damit verbundenen Abstichkanaldeckels über eine durch das Steuergetriebe vorgegebene Funktion, mit der die Schwenkbewegung von der Schwenkbewegung des Schwenkbetriebs abhängig ist, vorgegeben werden.

Erfindungsgemäß weist das Steuergetriebe eine am Gestell ausgebildete Führungseinrichtung auf, die mit einem an der Schwenkbasis ausgebildeten Steuerhebel zusammenwirkt, der die Steuerstange gelenkig mit der Führungseinrichtung verbindet, sodass nicht nur die Steuerfunktion mittels des Steuergetriebes dem Lastträger aufgeprägt werden kann, sondern darüber hinaus auch der Steuerhebel für eine sichere Übertragung der Steuerkräfte sorgt.

Erfindungsgemäß bildet der Steuerhebel als eine Hebelwippe aus mit einer an der Schwenkbasis festgelegten Hebelachse zur Schwenklagerung des Steuerhebels in einer zur Führungsebene der Führungseinrichtung parallelen Schwenkebene, wobei ein erster Hebelarm des Steuerhebels einen Steuerhebelarm ausbildet, dessen Ende über den Steuerkopf im Eingriff mit der Führungseinrichtung ist, und ein zweiter Hebelarm als Antriebshebelarm ein Antriebsglied des Schwenk-Gelenkvierecks ausbildet.

Wenn die Führungseinrichtung eine Steuerkurve definiert, längs der ein Steuerkopf des Steuerhebels geführt ist, kann durch individuelle Definition der Steuerkurve auf einfache Art und Weise die Schwenkbewegung des Lastträgers dem jeweils vor Ort gegebenen Kollisionsbedingungen angepasst werden.

Vorzugsweise ist die Steuerkurve als Führungsnut ausgebildet, in die der als Mitnehmer ausgebildete Steuerkopf eingreift, sodass eine mechanisch einfach ausführbare und belastbare Ausbildung der Steuerkurve möglich ist.

Vorzugsweise ist die Führungseinrichtung als eine mit dem Gestell verbundene Steuerscheibe ausgebildet, was insbesondere die Anpassung des Steuergetriebes an die jeweiligen, vor Ort gegebenen besonderen Kollisionsbedingungen durch einfachen Austausch der Steuerscheibe ermöglicht.

Wenn die Hebelachse oberhalb des Auslegers an der Schwenkbasis angeordnet ist und eine Längsachse des Parallelauslegers schneidet, ist trotz der voneinander abweichenden Positionen der Hebelachse des Steuerhebels und der Schwenkachse des Auslegers an der Schwenkbasis ein in der Horizontalebene definiertes Schwenk-Gelenkviereck realisiert.

Vorzugsweise weist das Steuergetriebe einen mit der Schwenkbasis verbunden Schwenkträger, die mit dem Gestell verbundene Führungseinrichtung und den mit dem Schwenkträger über die Hebelachse verbundenen Steuerhebel auf, sodass eine besonders kompakte Ausführung des Steuergetriebes möglich ist.

Bei einer besonders bevorzugten Ausführungsform eines Manipulators, der in besonderem Maß zur Handhabung von Abstichkanaldeckeln geeignet ist, ist der Ausleger zur Ausbildung eines Hubgestänges, das ein in einer Vertikalebene ausgebildetes Hub-Gelenkparallelogramm aufweist, gelenkig über eine Schwenkachse an der Schwenkbasis angeschlossenen und parallel zu einem über eine Schwenkachse gelenkig an der Schwenkbasis angeschlossenen Lastarm angeordnet, wobei der Ausleger und der Lastarm an ihren der Schwenkbasis gegenüber liegenden Enden über den Lastträger gelenkig miteinander verbunden sind.

Vorzugsweise ist zur Ausbildung des Schwenk-Gelenkvierecks als Schwenk-Gelenkparallelogramm der Ausleger parallel zur Steuerstange angeordnet, sodass eine besonders verschleißarme Kinematik ermöglicht wird.

Vorzugsweise ist die Schwenkachse des Auslegers zusammen mit der Hebelachse des Steuerhebels an dem Schwenkträger ausgebildet.

In einer besonders bevorzugten Ausführungsform dient die Antriebseinrichtung sowohl zum Verschwenken des Hubgestänges als auch zum Verschwenken der Schwenkeinrichtung des Lastträgers.

Wenn die Antriebseinrichtung auf der Führungseinrichtung und insbesondere auf der als Steuerscheibe ausgebildeten Führungseinrichtung angeordnet ist, kann sowohl die Übertragung der Antriebskraft auf die Schwenkbasis als auch die Übertragung der Antriebskraft auf den Steuerhebel auf kürzestem Weg erfolgen, sodass Antriebsstränge oder dergleichen vermieden werden können.

Bei einer besonders bevorzugten Ausführungsform ist die Steuerkurve derart ausgebildet, dass die Steuerkurve eine Reihenfolge von Steuerpunkten definiert, deren Abstand von der vertikalen Schwenkachse der Schwenkbasis einen zwischen dem Antriebsglied und dem durch den Abstand der Hebelachse zur Schwenkachse des Lastträgers definierten Festglied des Horizontal-Gelenkparallelogramms ausgebildeten Parallelogrammwinkel definiert.

Nachfolgend wird eine bevorzugte Ausführungsform der Erfindung anhand der Zeichnung näher erläutert.

Es zeigen:
**Fig. 1****:** einen Manipulator in isometrischer Darstellung;
**Fig. 2****:** eine vergrößerte Darstellung eines Lastträgers des Manipulators;
**Fig. 3****:** den Manipulator in Seitenansicht;
**Fig. 4****:** den in **Fig. 3** dargestellten Manipulator in einer ersten Schwenkposition in Draufsicht;
**Fig. 5**: den in **Fig. 3** dargestellten Manipulator in einer zweiten Schwenkposition in Draufsicht;
**Fig. 6****:** eine vergrößerte Darstellung eines Steuergetriebes des in der in **Fig. 4** dargestellten Schwenkposition angeordneten Manipulators;
**Fig. 7****:** eine vergrößerte Darstellung des Steuergetriebes des in **Fig. 5** in der zweiten Schwenkposition dargestellten Manipulators;
**Fig. 8****:** eine vergrößerte Darstellung des Steuergetriebes des in **Fig. 3** dargestellten Manipulators.

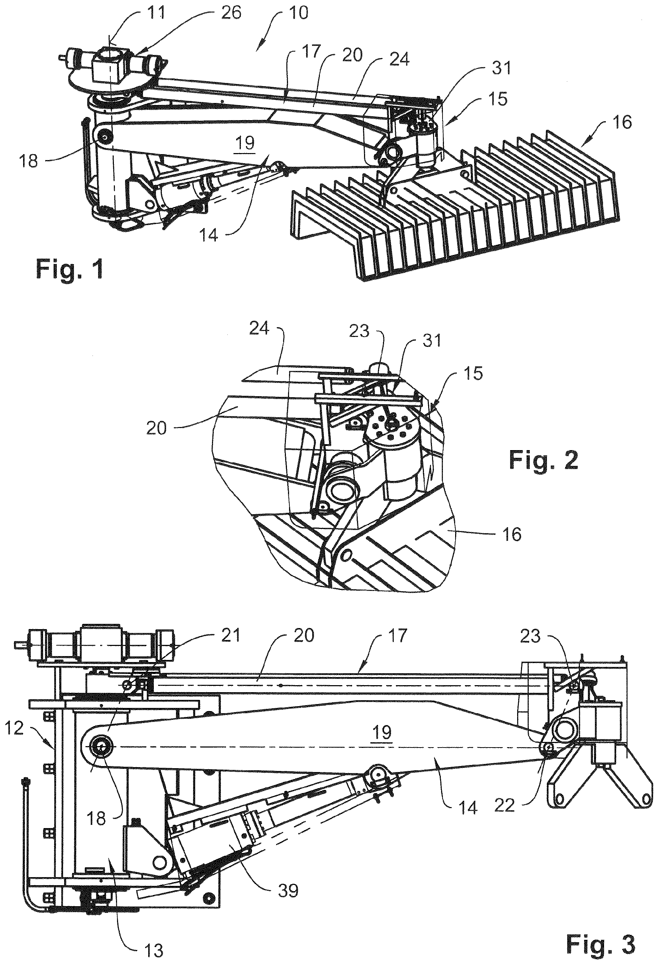

**Fig. 3** zeigt einen in **Fig. 1** in isometrischer Darstellung abgebildeten Manipulator 10 in Seitenansicht mit einer um eine vertikale Schwenkachse 11 in einem Gestell 12 drehbar gelagerten Schwenkbasis 13, die mit einem Hubgestänge 14 versehen ist, das an seinem freien Ende einen Lastträger 15 zur Verbindung mit einem hier beispielhaft als Manipulationsgegenstand dargestellten Abstichkanaldeckel 16 aufweist.

Das Hubgestänge 14 weist ein in einer Vertikalebene verschwenkbares Hub-Gelenkparallelogramm 17 auf mit einem über eine Schwenkachse 18 gelenkig mit der Schwenkbasis 13 verbundenen Lastarm 19 und einem hierzu parallelen Ausleger 20, der ebenfalls über eine Schwenkachse 21 gelenkig mit der Schwenkbasis 13 verbunden ist. An ihren jeweils der Schwenkbasis 13 gegenüberliegenden Enden sind der Lastarm 19 und der Ausleger 20 jeweils über eine Schwenkachse 22, 23 gelenkig mit dem Lastträger 15 verbunden, sodass, wie am Besten aufgrund der in **Fig. 3** eingezeichneten, die Schwenkachsen 18 und 21, 21 und 23, 23 und 22 sowie 22 und 18 miteinander verbindenden Hilfslinien deutlich wird, das Hub-Gelenkparallelogramm 17 ausgebildet ist, das eine Schwenkbewegung in einer vertikalen Ebene ermöglicht zum Anheben oder Absenken des mit dem Lastträger 18 verbundenen Abstichkanaldeckels 16, wobei sich der Lastträger 15 in paralleler Ausrichtung zu einem durch die Schwenkbasis 13 zwischen den Schwenkachsen 18 und 21 definierten "Festglied" des Hub-Gelenkparallelogramms 17 bewegt, sodass der Abstichkanaldeckel 16 während der Hubbewegung seine horizontale Ausrichtung beibehält.

Zur Ausführung der Hubbewegung ist zwischen der Schwenkbasis 13 und dem Lastarm 19 ein in den **Fig. 1und 3** dargestellter Hubzylinder 39 vorgesehen.

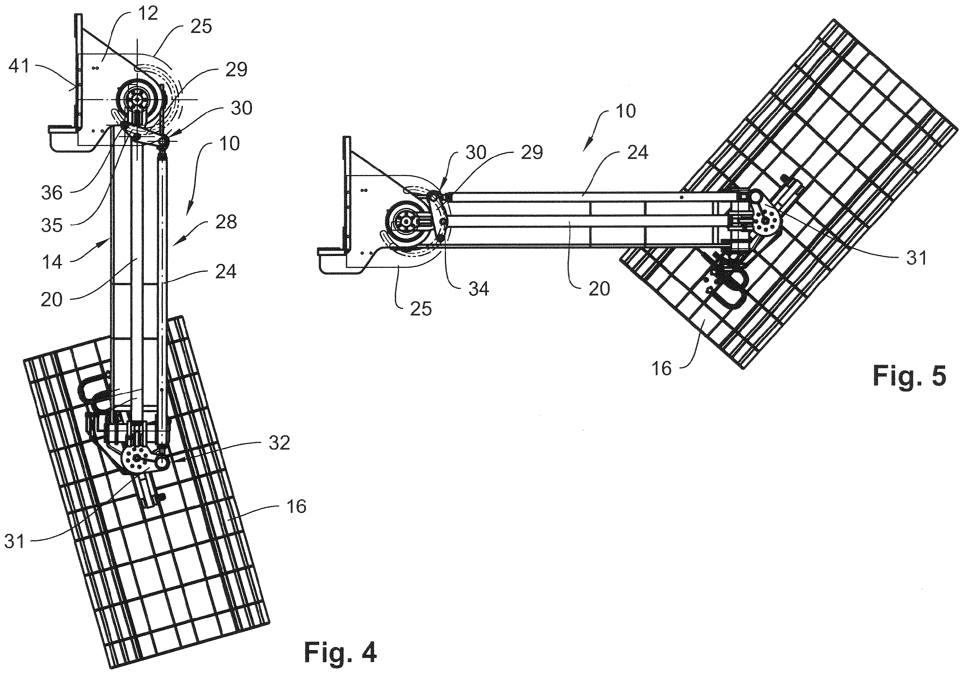

In den **Fig. 4** und **5** ist der Manipulator 10 in zwei unterschiedlichen Schwenkpositionen dargestellt, wobei **Fig. 4** eine erste Schwenkposition zeigt, in der das mit der Schwenkbasis 13 verbundene Hubgestänge 14 eine im Wesentlichen parallele Ausrichtung zu einer an einer Rückseite des Gestells 12 ausgebildeten Montageplatte 41 in einer hier mit der Zeichnunsgebene übereinstimmenden horizontalen Schwenkebene aufweist.

Zur besseren Darstellung eines Steuergetriebes 42, das auf eine hier parallel zum Ausleger 20 des Hub-Gelenkparallelogramms 17 angeordnete Steuerstange 24 wirkt, ist bei dem in den **Fig. 4** und **Fig. 5** dargestellten Manipulator 10 eine Steuerscheibe 25 transparent dargestellt. Auf der Steuerscheibe 25, die ein Bestandteil des Gestells 12 bzw. fest mit diesem verbunden ist, ist eine Antriebseinrichtung 26 für den Schwenkantrieb der Schwenkbasis 13 angeordnet.

Wie aus den **Fig. 4** und **Fig. 5** ersichtlich, bilden der Ausleger 20 und die Steuerstange 24 im Fall des dargestellten, bevorzugten Ausführungsbeispiels eines Manipulators zur Handhabung eines Abstichkanaldeckels 16 parallele Gelenkglieder eines in der Horizontalebene angeordneten, als Schwenk-Gelenkparallelogramm 28 ausgeführten Schwenk-Gelenkvierecks, dessen weitere zueinander parallelen Gelenkglieder durch einen Antriebshebelarm 29 eines Steuerhebels 30 und einen Schwenkarm 31 einer Schwenkeinrichtung 32 des Lastträgers 15 gebildet sind.

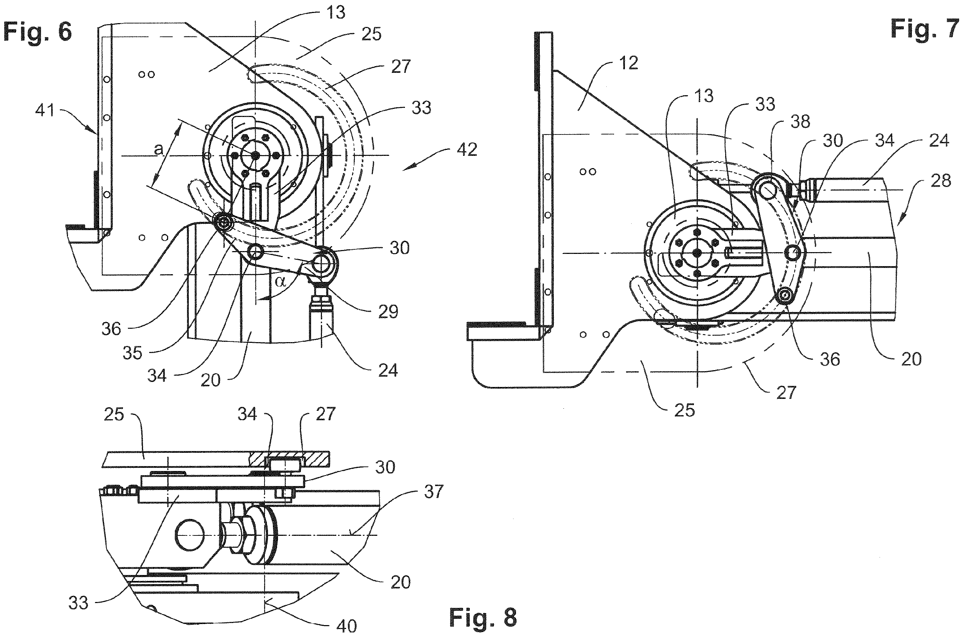

Wie insbesondere aus einer Zusammenschau der **Fig. 6, 7** und **8** deutlich wird, ist der Steuerhebel 30 an einem an der Schwenkbasis 13 angeordneten und fest mit dieser verbundenen Schwenkträger 33 auf einer Hebelachse 34 schwenkbar gelagert und bildet eine Hebelwippe, derart, dass ein erster Hebelarm des Steuerhebels 30 den Antriebshebelarm ausbildet und ein zweiter Hebelarm des Steuerhebels 30 einen Steuerhebelarm 35 ausbildet, der an seinem freien Ende mit einem Mitnehmer 36 in eine auf der Unterseite der Steuerscheibe 25 ausgebildeten Führungsnut 27 eingreift. Dabei befindet sich die am Schwenkträger 33 ausgebildete Hebelachse 34 des Steuerhebels, wie insbesondere **Fig. 8** zeigt, oberhalb des Auslegers 20, derart, dass eine Mittellinie 40 der Hebelachse 34 eine Längsachse 37 des Auslegers 20 schneidet. Somit wird zwischen der Hebelachse 34 und einer vertikalen Schwenkachse 38 der Schwenkeinrichtung 32 des Lastträgers 15 kinematisch ein Festglied des in der Horizontalebene angeordneten Schwenk-Gelenkparallelogramms 28 gebildet.

Insbesondere aus einer Zusammenschau der **Fig. 7** und **8** lässt sich erkennen, dass das Steuergetriebe 42 als wesentliche Bestandteile den mit der Schwenkbasis 13 starr verbundenen und daher zusammen mit der Schwenkbasis 13 verschwenkbaren Schwenkträger 33, die an dem Gestell 12 bzw. an der drehfest am Gestell 12 angeordneten Steuerscheibe 25 als Führungsnut 27 ausgebildete Führungseinrichtung und den mit dem Schwenkträger 33 über die Hebelachse 34 gelenkig verbundenen Steuerhebel 30 aufweist. Wie **Fig. 7** zeigt, ist dabei die Steuerstange 24 über ein hier als Kugelkopf ausgebildetes Drehgelenk 38 mit dem Antriebshebelarm 29 verbunden, sodass eine Hubbewegung des Hubgestänges 14, also ein Verschwenken des Hub-Gelenkparallelogramms 17 in einer vertikalen Ebene nicht zu Zwangsbedingungen im Drehgelenk 38 führt. Tatsächlich ist ein Verschwenken der Schwenkeinrichtung 32 des Schwenkträgers 33, die ein entsprechendes Verschwenken des Abstichkanaldeckels 16 bewirkt, auch nur bei Anordnung des Schwenk-Gelenkparallelogramms 28 in der Horizontalebene vorgesehen.

Wie am Besten anhand der **Fig. 4 und 5** nachvollziehbar ist, wirkt zum Verschwenken des Schwenkarms 31 der Schwenkeinrichtung 32 des Lastträgers 15 der durch den ersten Hebelarm des Steuerhebels 30 gebildete Antriebshebelarm 29 über die parallel zum Ausleger 20 bewegte Steuerstange 24 auf den Schwenkarm 31 der Schwenkeinrichtung 32. Die Schwenkbewegung des Antriebsglieds 29 erfolgt durch Verschwenken des Steuerhebelarms 35 des Steuerhebels 30 um die Hebelachse 34. Die Schwenkbewegung des Steuerhebelarms 35 wird durch die Relativbewegung des Mitnehmers 36 in der Führungsnut 27 beim Verschwenken der Schwenkbasis 13 um die vertikale Schwenkachse 11 in der Führungsnut 27 bewirkt. Somit erfolgt durch das mittels der Schwenkbewegung der Schwenkbasis 13 angetriebene Steuergetriebe 23 eine Relativdrehung des mit der Schwenkeinrichtung 32 des Lastträgers 15 verbundenen Abstichkanaldeckels 16 gegenüber dem Hubgestänge 14, sodass der Schwenkbewegung des mit der Schwenkbasis 13 verbundenen Hubgestänges 14 in der Horizontalebene die Drehung der Schwenkeinrichtung 32 des Lastträgers 15 in der Horizontalebene überlagert wird, wobei ein zwischen dem Antriebshebelarm 29, der das Antriebsglied des Schwenk-Gelenkparallelogramms 28 bildet, und dem Lastarm 19 gebildeter Parallelogrammwinkel a abhängig ist von dem Abstand a des Mitnehmers 36 von der vertikalen Schwenkachse 11.

Obwohl bei dem dargestellten Ausführungsbeispiel die Führungseinrichtung 27 teilkreisförmig mit einem gegenüber der vertikalen Schwenkachse 11 verschobenen Kreismittelpunkt ausgebildet ist, kann die Führungsnut 27 bzw. eine hier als Führungsnut ausgebildete Steuerkurve des Steuergetriebes 42 einen unregelmäßigen, mit wechselnden Krümmungsradien versehenen Verlauf aufweisen, der entsprechend der gewünschten Relativbewegung des Lastträgers 15 gegenüber dem Hubgestänge 14 definierbar ist, wobei der Lastträger 15 auch einander nachfolgende entgegengesetzte Drehbewegungen ausführen kann.

## Patentansprüche

1. Manipulator (10) zum Verschwenken eines Manipulationsgegenstands, wobei der Manipulator (10) ein Gestell (12) mit einer gegenüber dem Gestell (12) mittels einer Antriebseinrichtung (26) um eine vertikale Schwenkachse (11) in einer Horizontalebene verschwenkbare Schwenkbasis (13) aufweist, wobei die Schwenkbasis einen Ausleger (20) mit einem am freien Ende des Auslegers (20) angeordneten Lastträger (15) zur Verbindung mit dem Manipulationsgegenstand aufweist, wobei der Lastträger (15) eine Schwenkeinrichtung (32) zum Verschwenken des Manipulationsgegenstands in der Horizontalebene aufweist, wobei zur Ausbildung eines in der Horizontalebene ausgebildeten, den Ausleger (20) umfassenden Schwenk-Gelenkvierecks eine sich vom Gestell (12) zur Schwenkeinrichtung (32) erstreckende Steuerstange (24) vorgesehen ist, die mit einem Ende gelenkig an der Schwenkeinrichtung (32) des Lastträgers (15) und mit dem anderen Ende über ein Steuergetriebe (42) gelenkig mit dem Gestell (12) verbunden ist, derart, dass bei einer Basisschwenkbewegung der Schwenkbasis (13) über das Steuergetriebe (42) und die Steuerstange (24) eine der Basisschwenkbewegung überlagerte Lastträgerschwenkbewegung erfolgt, wobei das Steuergetriebe (42) eine am Gestell (12) ausgebildete Führungseinrichtung aufweist, die mit einem an der Schwenkbasis (13) angeordneten Steuerhebel (30) zusammenwirkt, der die Steuerstange (30) gelenkig mit der Führungseinrichtung verbindet,
**dadurch gekennzeichnet,**
**dass** der Steuerhebel (30) eine Hebelwippe ausbildet mit einer an der Schwenkbasis (13) festgelegten Hebelachse (34) zur Schwenklagerung des Steuerhebels (30) in einer zur Führungsebene der Führungseinrichtung parallelen Schwenkebene, wobei ein erster Hebelarm des Steuerhebels einen Steuerhebelarm (35) ausbildet, dessen Ende über den Steuerkopf im Eingriff mit der Führungseinrichtung ist, und ein zweiter Hebelarm als Antriebshebelarm (29) ein Antriebsglied des Schwenk-Gelenkvierecks ausbildet.

2. Manipulator nach Anspruch 1,
**dadurch gekennzeichnet,**
**dass** die Führungseinrichtung eine Steuerkurve definiert, längs der ein Steuerkopf des Steuerhebels (30) geführt ist.

3. Manipulator nach Anspruch 2,
**dadurch gekennzeichnet,**
**dass** die Steuerkurve als Führungsnut (27) ausgebildet ist, in die der als Mitnehmer (36) ausgebildete Steuerkopf eingreift.

4. Manipulator nach einem der vorangehenden Ansprüche,
**dadurch gekennzeichnet,**
**dass** die Führungseinrichtung als eine mit dem Gestell (12) verbundene Steuerscheibe (25) ist.

5. Manipulator nach einem der vorangehenden Ansprüche,
**dadurch gekennzeichnet,**
**dass** die Hebelachse (34) oberhalb des Auslegers (20) an der Schwenkbasis (13) angeordnet ist und eine Längsachse (37) des Auslegers (20) schneidet.

6. Manipulator nach einem der vorangehenden Ansprüche,
**dadurch gekennzeichnet,**
**dass** das Steuergetriebe (42) einen mit der Schwenkbasis (13) verbundenen Schwenkträger (33), die mit dem Gestell (12) verbundene Führungseinrichtung und den mit dem Schwenkträger (33) über die Hebelachse (34) verbundenen Steuerhebel (30) umfasst.

7. Manipulator nach einem der vorangehenden Ansprüche,
**dadurch gekennzeichnet,**
**dass** der Ausleger (20) zur Ausbildung eines Hubgestänges (14), das ein in einer Vertikalebene ausgebildetes Hub-Gelenkparallelogramm (17) aufweist, gelenkig über eine Schwenkachse (21) an die Schwenkbasis (13) angeschlossenen und parallel zu einem über eine Schwenkachse (18) gelenkig an der Schwenkbasis (13) angeschlossenen Lastarm (19) angeordnet ist, wobei der Ausleger (20) und der Lastarm (19) an ihren der Schwenkbasis (13) gegenüberliegenden Enden über den Lastträger (15) gelenkig miteinander verbunden sind.

8. Manipulator nach Anspruch 7,
**dadurch gekennzeichnet,**
**dass** zur Ausbildung des Schwenk-Gelenkvierecks als Schwenk-Gelenkparallelogramm (28) der Ausleger (20) parallel zur Steuerstange (24) angeordnet ist.

9. Manipulator nach Anspruch 7 oder 8,
**dadurch gekennzeichnet,**
**dass** die Schwenkachse (21) des Ausleger (20) zusammen mit der Hebelachse (34) des Steuerhebels (30) an dem Schwenkträger (33) ausgebildet ist.

10. Manipulator nach einem der Ansprüche 7 bis 9,
**dadurch gekennzeichnet,**
**dass** die Antriebseinrichtung (26) sowohl zum Verschwenken des Hubgestänges (14) als auch zum Verschwenken der Schwenkeinrichtung (32) des Lastträgers (15) dient.

11. Manipulator nach Anspruch 10,
**dadurch gekennzeichnet,**
**dass** die Antriebseinrichtung (26) auf der Führungseinrichtung angeordnet ist.

12. Manipulator nach einem der Ansprüche 2 bis 11,
**dadurch gekennzeichnet,**
**dass** die Steuerkurve eine Reihenfolge von Steuerpunkten definiert, deren Abstand a von der vertikalen Schwenkachse (11) der Schwenkbasis (13) einen zwischen dem Antriebsglied und dem Festglied des Schwenk-Gelenkparallelogramms (28) ausgebildeten Parallelogrammwinkel α definiert.

## Claims

1. A manipulator (10) for pivoting an object of manipulation, the manipulator (10) having a frame (12) comprising a pivot base (13) which can be pivoted in a horizontal plane about a vertical pivot axis (11) relative to the frame (12) by means of a drive (26), the pivot base having a boom (20) comprising a load carrier (15) which is disposed at a free end of the boom (20) and serves to be connected to the object of manipulation, the load carrier (15) having a pivot device (32) for pivoting the object of manipulation in the horizontal plane, wherein, in order to produce a pivoting four-bar linkage formed in the horizontal plane and comprising the boom (20), a control bar (24) extending from the frame (12) to the pivot device (32) is provided, one end of the control bar (24) being articulated to the pivot device (32) of the load carrier (15) and the other end being articulated to the frame (12) via a control gear mechanism (42) in such a manner that in the event of a base pivoting movement of the pivot base (13), a load carrier pivoting movement superimposed on the base pivoting movement is effected via the control gear mechanism (42) and the control bar (24), the control gear mechanism (42) having a guide formed on the frame (12), said guide interacting with a control lever (30) which is disposed on the pivot base (13) and articulates the control bar (30) to the guide,
**characterized in that**
the control lever (30) forms a lever rocker having a lever axis (34) fixed to the pivot base (13) for pivot-mounting the control lever (30) in a pivot plane parallel to the guide plane of the guide, a first lever arm of the control lever forming a control lever arm (35), whose end is engaged with the guide via the control head, and a second lever arm as a driving lever arm (29) forming a driving member of the pivoting four-bar linkage.

2. The manipulator according to claim 1,
**characterized in that**
the guide defines a control curve along which a control head of the control lever (30) is guided.

3. The manipulator according to claim 2,
**characterized in that**
the control curve is a guiding groove (27) into which the control head, which is a driver (36), engages.

4. The manipulator according to any one of the preceding claims,
**characterized in that**
the guide is a control disk (25) which is connected to the frame (12).

5. The manipulator according to any one of the preceding claims,
**characterized in that**
the lever axis (34) is disposed above the boom (20) on the pivot base (13) and intersects a longitudinal axis (37) of the boom (20).

6. The manipulator according to any one of the preceding claims,
**characterized in that**
the control gear mechanism (42) comprises a pivot carrier (33) connected to the pivot base (13), the guide connected to the frame (12), and the control lever (30) connected to the pivot carrier (33) via the lever axis (34).

7. The manipulator according to any one of the preceding claims,
**characterized in that**
in order to form a lifting linkage (14) which has an articulated lifting parallelogram (17) formed in a vertical plane, the boom (20) is articulated to the pivot base (13) via a pivot axis (21) and disposed parallel to a load arm (19) articulated to the pivot base (13) via a pivot axis (18), the boom (20) and the load arm (19) being articulated to each other via the load carrier (15) at their ends opposite the pivot base (13).

8. The manipulator according to claim 7,
**characterized in that**
in order to realize the pivoting four-bar linkage as an articulated pivoting parallelogram (28), the boom (20) is disposed parallel to the control bar (24).

9. The manipulator according to claim 7 or 8,
**characterized in that**
the pivot axis (21) of the boom (20) is formed on the pivot carrier (33) together with the lever axis (34) of the control lever (30).

10. The manipulator according to any one of claims 7 to 9,
**characterized in that**
the drive (26) serves both to pivot the lifting linkage (14) and to pivot the pivot device (32) of the load carrier (15).

11. The manipulator according to claim 10,
**characterized in that**
the drive (26) is disposed on the guide.

12. The manipulator according to any one of claims 2 to 11,
**characterized in that**
the control curve defines a sequence of control points whose distance a from the vertical pivot axis (11) of the pivot base (13) defines a parallelogram angle α formed between the driving member and the fixed member of the articulated pivoting parallelogram (28).

## Revendications

1. Manipulateur (10) de pivotement d'un objet de manipulation, le manipulateur (10) ayant un cadre (12) comprenant une base de pivotement (13) qui peut être pivotée par rapport au cadre (12) dans un plan horizontal autour d'un axe de pivotement (11) vertical au moyen d'un entraînement (26), la base de pivotement ayant une potence (20) comprenant une porte-charge (15) qui est disposée sur une extrémité libre de la potence (20) et sert à être liée à l'objet de manipulation, la porte-charge (15) ayant un mécanisme de pivotement (32) de l'objet de manipulation dans le plan horizontal, dans lequel, afin de former un mécanisme à quatre barres pivotant formé dans le plan horizontal et comprenant la potence (20), une barre de commande (24) s'étendant du cadre (12) au mécanisme de pivotement (32) est fournie, une extrémité de la barre de commande (24) étant articulée sur le mécanisme de pivotement (32) de la porte-charge (15) et l'autre extrémité étant articulée sur le cadre (12) par l'intermédiaire d'un engrenage de commande (42) de telle manière que, lors d'un mouvement pivotant de la base de pivotement (13), un mouvement pivotant de la porte-charge superposant le mouvement pivotant de la base est effectué par l'engrenage de commande (42) et la barre de commande (24), l'engrenage de commande (42) ayant un guide formé sur le cadre (12), le guide interagissant avec un levier de commande (30) qui est disposé sur la base de pivotement (13) et articule la barre de commande (30) sur le guide,
**caractérisé en ce que**
le levier de commande (30) forme une bascule de levier ayant un axe de levier (34) fixé sur la base de pivotement (13) pour le montage pivotant du levier de commande (30) dans une plan de pivotement parallèle au plan du guide, un premier bras de levier du levier de commande formant und bras de levier de commande (35), dont l'extrémité est en prise avec le guide par l'intermédiaire de la tête de commande, et un deuxième bras de levier formant, comme bras de levier d'entraînement (29), un élément d'entraînement du mécanisme à quatre barres pivotant.

2. Manipulateur selon la revendication 1,
**caractérisé en ce que**
le guide définit une courbe de commande le long de laquelle une tête de commande du levier de commande (30) est guidée.

3. Manipulateur selon la revendication 2,
**caractérisé en ce que**
la courbe de commande est une rainure de guidage (27) dans laquelle la tête de commande, qui est un entraîneur (36), vient en prise.

4. Manipulateur selon l'une quelconque des revendications précédentes, **caractérisé en ce que**
le guide est une disque de commande (25) qui est liée au cadre (12).

5. Manipulateur selon l'une quelconque des revendications précédentes, **caractérisé en ce que**
l'axe de levier (34) est disposé au-dessus de la potence (20) sur la base de pivotement (13) et croise un axe longitudinal (37) de la potence (20).

6. Manipulateur selon l'une quelconque des revendications précédentes, **caractérisé en ce que**
l'engrenage de commande (42) comprend un support pivotant (33) lié à la base de pivotement (13), le guide lié au cadre (12) et le levier de commande (30) lié au support pivotant (33) par l'intermédiaire de l'axe de levier (34).

7. Manipulateur selon l'une quelconque des revendications précédentes, **caractérisé en ce**
**qu'**afin de former un mécanisme à barres de levage (14) qui a un parallélogramme de levage (17) articulé formé dans un plan vertical, la potence (20) est articulée sur la base de pivotement (13) par l'intermédiaire d'un axe de pivotement (21) et est parallèle à un bras de charge (19) articulé sur la base de pivotement (13) par l'intermédiaire d'un axe de pivotement (18), la potence (20) et le bras de charge (19) étant articulés l'un sur l'autre par l'intermédiaire de la porte-charge (15) à leurs extrémités opposées à la base de pivotement (13).

8. Manipulateur selon la revendication 7,
**caractérisé en ce**
**qu'**afin de former le mécanisme à quatre barres pivotant comme parallélogramme de pivotement (28) articulé, la potence (20) est parallèle à la barre de commande (24).

9. Manipulateur selon la revendication 7 ou 8,
**caractérisé en ce que**
l'axe de pivotement (21) de la potence (20) est formé sur le support pivotant (33) conjointement avec l'axe de levier (34) du levier de commande (30).

10. Manipulateur selon l'une quelconque des revendications 7 à 9,
**caractérisé en ce que**
l'entraînement (26) sert à pivoter le mécanisme à barres de levage (14) et à pivoter le mécanisme de pivotement (32) de la porte-charge (15).

11. Manipulateur selon la revendication 10,
**caractérisé en ce que**
l'entraînement (26) est disposé sur le guide.

12. Manipulateur selon l'une quelconque des revendications 2 à 11,
**caractérisé en ce que**
la courbe de commande définit une séquence de points de commande dont la distance a de l'axe de pivotement (11) vertical de la base de pivotement (13) définit un angle de parallélogramme α formé entre l'élément d'entraînement et l'élément fixe du parallélogramme pivotant (28) articulé.
